# FASCICULE DE BREVET EUROPEEN

(11) **EP 4 589 885 B1**
(45) Date de publication et mention de la délivrance du brevet: **04.11.2026**
(21) Numéro de dépôt: 25152034.2
(22) Date de dépôt: 15.01.2025
(51) Int. Cl.: H04L 9/40, G06F 21/64, H04L 9/32

(54) **PROTECTION DE DONNÉES**
DATENSCHUTZ
DATA PROTECTION

(30) Priorité: 18.01.2024 FR 2400497
(43) Date de publication de la demande: 23.07.2025
(73) Titulaire: STMicroelectronics International N.V., 1228 Plan-les-Ouates, Geneva (CH)
(72) Inventeur: JAOUEN, Michel, 72530 YVRE L'EVEQUE (FR)
(74) Mandataire: Cabinet Beaumont

(56) Documents cités:
- WO-A1-2022/211899
- US-A1- 2009 055 658
- US-B2- 9 722 992

## Description

### Domaine technique

La présente description concerne de façon générale la protection de données générées et/ou utilisées par une application mise en œuvre par un dispositif électronique.

### Technique antérieure

Il est courant d'utiliser des dispositifs et systèmes électroniques adaptées à exécuter plusieurs fonctionnalités différentes, elles-mêmes mises en œuvre par des applications logicielles.

WO 2022/211899 A1 (VISA INT SERVICE ASS [US]) 6 octobre 2022 décrit des procédés et des systèmes de chiffrement et de déchiffrement crypto-agiles. Un système informatique peut posséder un fichier de protocole qui identifie un ou plusieurs modules logiciels cryptographiques. Au moyen de ces modules logiciels cryptographiques, le système informatique peut générer une pluralité de secrets partagés et une clé de session, puis utiliser la clé de session pour chiffrer un message. Le message peut être envoyé à un ordinateur serveur qui peut ensuite déchiffrer le message. Ultérieurement, le fichier de protocole peut être mis à jour afin d'identifier un ensemble différent de modules logiciels cryptographiques, qui peuvent être utilisés pour chiffrer des messages. En outre, l'ordinateur serveur peut transmettre des modules logiciels cryptographiques supplémentaires au système informatique, permettant au système informatique d'utiliser ces modules logiciels cryptographiques pour générer des clés cryptographiques. Ainsi, le fichier de protocole cryptographique peut être modifié en réponse à des modifications des besoins cryptographiques du système informatique.

Il serait souhaitable de pouvoir améliorer, au moins en partie, certains aspects des architectures logicielles. Plus particulièrement, il serait souhaitable de pouvoir améliorer, au moins en partie, certains aspects de la sécurisation des données manipulées par des applications logicielles. Par exemple, il est généralement souhaitable qu'une application logicielle installée dans un dispositif n'aient pas accès aux secrets d'autres applications logicielles installées et/ou précédemment installées dans le dispositif.

### Résumé de l'invention

Un mode de réalisation prévoit un procédé comprenant :
a) la réception, par un dispositif électronique, d'un module logiciel d'une première application, le module logiciel comprenant une clef publique associée à la première application ;
b) la génération, par un circuit cryptographique du dispositif électronique, d'une clef de chiffrement sur la base d'une clef secrète du dispositif électronique et de l'un parmi : la clef publique et une valeur d'identification dérivée à partir de la clef publique ;
c) la génération d'une ou plusieurs données protégées en appliquant une opération cryptographique, par le circuit cryptographique, sur une ou plusieurs premières données associées à la première application et sur la base de la clef de chiffrement ; et
d) le stockage de l'une ou plusieurs données protégées dans une première partie d'une mémoire du dispositif électronique..

Selon un mode de réalisation, l'opération cryptographique comprend le chiffrement, en utilisant la clef de chiffrement, de l'une ou plusieurs premières données.

Selon un mode de réalisation, l'opération cryptographique comprend le calcul d'une ou plusieurs premières valeurs de signature associées à l'une ou plusieurs premières données en utilisant la clef de chiffrement, l'une ou plusieurs données protégées comprenant l'une ou plusieurs premières valeurs de signature.

Selon un mode de réalisation, la clef de chiffrement correspond à une clef secrète dérivée par application d'une fonction de dérivation de clef par le circuit cryptographique sur la base de la valeur d'identification, la valeur d'identification étant issue d'un hachage de la clef publique.

Selon un mode de réalisation, le module logiciel comprend un code d'exécution, et une deuxième valeur de signature associée au code d'exécution, le procédé comprenant en outre, avant la génération de l'un ou plusieurs données protégées, l'authentification du module logiciel sur la base d'une vérification de la deuxième valeur de signature par l'intermédiaire de la clef publique.

Selon un mode de réalisation, le procédé ci-dessus comprend en outre le stockage du code d'exécution dans une deuxième partie de la mémoire distincte de la première partie.

Selon un mode de réalisation, les étapes a) à d) sont réalisées par l'intermédiaire d'une plateforme logicielle du dispositif électronique.

Selon un mode de réalisation, le procédé ci-dessus comprend en outre en outre, avant la réalisation de l'étape b) :
- la génération d'une valeur de vérification en appliquant une fonction de hachage à la clef publique ;
- la comparaison de la valeur de vérification avec la valeur d'identification ; et
- si la valeur de vérification et la valeur d'identification ne correspondent pas entre elles, la suppression du module logiciel.

Selon un mode de réalisation, le procédé ci-dessus comprend en outre la génération de la valeur d'identification, par application d'une fonction de hachage, par le circuit cryptographique, à la clef publique.

Selon un mode de réalisation, la clef secrète du dispositif électronique est une clef unique matérielle ou une clef dérivée d'une clef unique matérielle.

Selon un mode de réalisation, le procédé comprend en outre la modification de la clef publique lors d'une mise-à-jour de la première application.

Selon un mode de réalisation, le procédé ci-dessus comprend en outre l'exécution de la première application, par un processeur du dispositif, l'exécution comprenant la récupération de l'une ou plusieurs premières données associée à la première application, en faisant ;
- l'extraction de la clef publique et une nouvelle génération de la clef de chiffrement sur la base d'une clef secrète du dispositif électronique et de l'un parmi : la clef publique et une valeur d'identification dérivée à partir de la clef publique ;
- l'application d'une nouvelle opération cryptographique sur l'une ou plusieurs données protégées stockées dans la première partie de la mémoire ; et
- la récupération de l'une ou plusieurs premières données.

Selon un mode de réalisation, la récupération de l'une ou plusieurs premières données s'effectue par l'intermédiaire d'une plateforme logicielle du dispositif électronique.

Un mode de réalisation prévoit un dispositif électronique configuré pour :
recevoir un module logiciel d'une première application, le module logiciel comprenant une clef publique, le dispositif électronique comprenant :
un circuit cryptographique configuré pour :
- générer une clef de chiffrement sur la base de l'un parmi : la clef publique et une valeur d'identification dérivée à partir de la clef publique ;
- générer un ou plusieurs données protégées en appliquant une opération cryptographique à une ou plusieurs premières données associées à la première application sur la base de la clef de chiffrement ; et
- une mémoire configurée pour stocker l'une ou plusieurs données protégées.

Selon un mode de réalisation, le dispositif électronique ci-dessus comprend en outre une plateforme logicielle configurée pour contrôler l'accès à la mémoire.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs illustrant un dispositif électronique, selon un mode de réalisation de la présente description ;
la figure 2 représente, très schématiquement et sous forme de blocs, un mode de réalisation d'un système logiciel ;
la figure 3 illustre la structure d'un module d'application logicielle, selon un mode de réalisation de la présente description ; et
la figure 4 est un organigramme illustrant des étapes d'un procédé de vérification, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

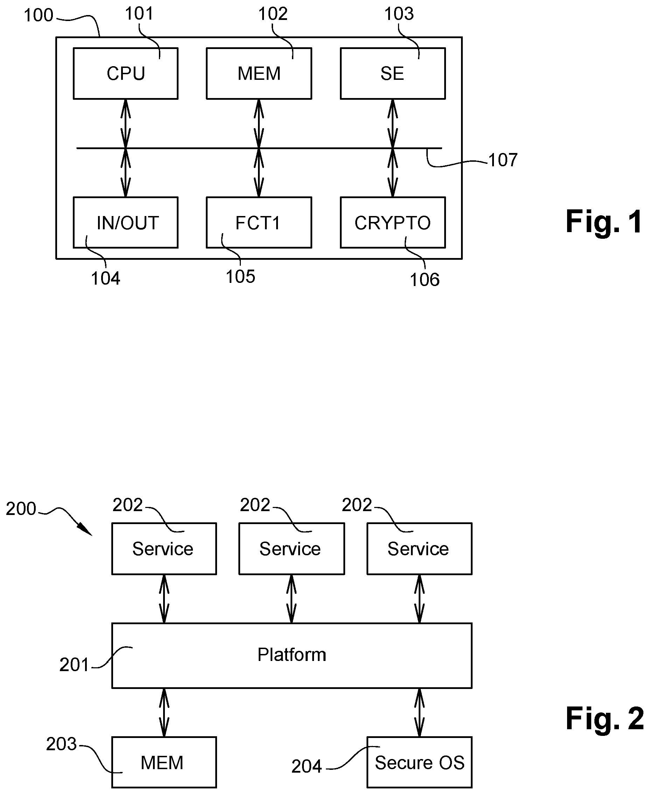

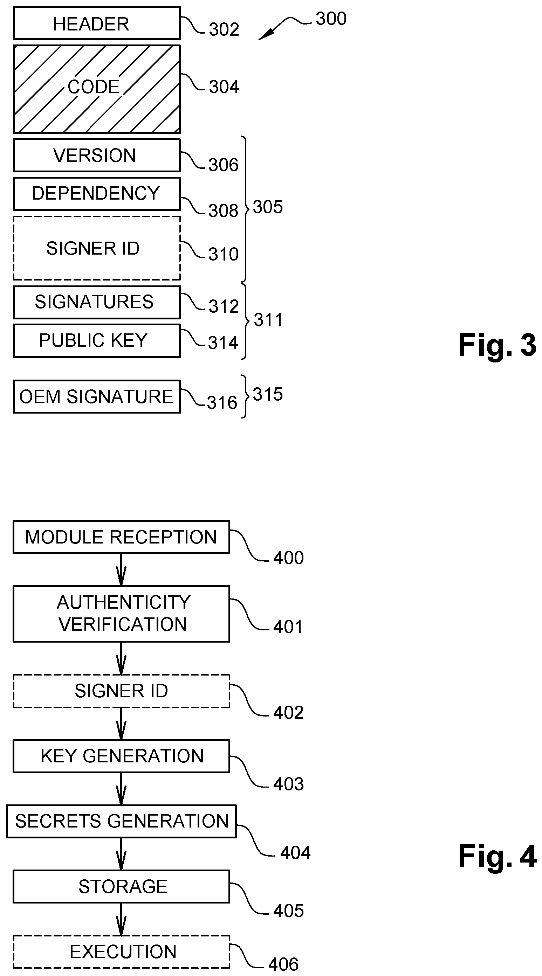

La figure 1 est un schéma bloc représentant, très schématiquement, une architecture d'un exemple d'un dispositif électronique 100 adapté à mettre **en** œuvre le système logiciel décrits en relation avec la figure 2, et/ou à stocker et à exécuter le module logiciel tel que décrit en relation avec la figure 3, et/ou à mettre en œuvre le procédé décrit en relation avec la figure 4.

Le dispositif électronique 100 comprend un processeur 101 (CPU) adapté à mettre en œuvre des traitements de données stockées dans des mémoires et/ou fournies par d'autres circuits du dispositif 100. Le processeur 101 peut, en outre, être adapté à mettre en œuvre une architecture logicielle du type de l'architecture logicielle décrite en relation avec la figure 2.

Le dispositif électronique 100 comprend, par exemple, une ou plusieurs mémoires 102 (MEM), parmi lesquelles, par exemple, une mémoire non volatile, une mémoire volatile, et/ou une mémoire morte. Chaque mémoire 102 peut être adaptée à stocker différents types de données, et peut comprendre des règles d'accès. En particulier, la ou les mémoires 102 peuvent comprendre des parties qui ne sont accessibles qu'à un ou plusieurs circuits du dispositif électronique, et/ou qu'à un ou plusieurs programmes logiciels mis en œuvre par le dispositif 100.

Le dispositif électronique 100 comprend, en outre, par exemple, un élément sécurisé 103 (SE) adapté à traiter des données sensibles et/ou secrètes. L'élément sécurisé 103 peut comprendre son ou ses propres processeurs, son ou ses propres mémoires, etc. L'élément sécurisé 103 peut, en outre, être adapté à mettre en œuvre une architecture logicielle du type de l'architecture logicielle décrite en relation avec la figure 2.

On appelle, dans la suite de la description, données sensibles et données secrètes des données dont le contenu n'est pas destiné à être public. Par exemple, ces données ne sont pas connues à l'extérieur du dispositif électronique 100, et/ou l'accès à ces données est restreint à certaines personnes et/ou circuits particuliers.

Le dispositif électronique 100 peut comprendre, en outre, un ou plusieurs circuits d'interface 104 (IN/OUT) adaptés à envoyer des données vers l'extérieur du dispositif 100 et/ou à recevoir des données provenant de l'extérieur du dispositif 100. Les circuits d'interface 104 peuvent être, en outre, adaptés à communiquer avec un système d'affichage de données, par exemple, un écran.

Le dispositif électronique 100 peut comprendre, en outre, un ou plusieurs circuits 105 (FCT1) adaptés à réaliser des fonctions. A titre d'exemple, les circuits 105 peuvent comprendre des circuits de mesures, des circuits de conversion de données, des circuits de commande d'équipement électronique ou électromécanique, etc. Le dispositif électronique 100 peut comprendre en outre, en plus ou à la place de l'élément sécurisé 103, un ou plusieurs, circuits cryptographique 106 configuré pour effectuer des opérations cryptographiques telles que par exemple, des opérations de chiffrement/déchiffrement asymétrique et/ou symétrique, des calculs de valeurs de signature d'une ou plusieurs données, des opérations de hachage, telle que par exemple le SHA256, etc.

Le dispositif électronique 100 comprend, par exemple, un ou plusieurs bus de données 107 adaptés à transférer des données entre le processeur 101 et l'une ou plusieurs mémoires 102, et dans certains cas également entre un ou plusieurs des autres composants 103, 104, 105 et 106 du dispositif électronique 100.

La figure 2 représente, très schématiquement et sous forme de blocs, un mode de réalisation d'une architecture logicielle, ou système logiciel 200.

L'architecture, ou système, 200 comprend, par exemple :
- une plateforme logicielle partagée et sécurisée 201 (Platform) ;
- une ou plusieurs applications logicielles sécurisées 202 (Service) ;
- une ou plusieurs mémoires 203 (MEM) ; et
- au moins un système d'exploitation sécurisé 204 (Secure OS).

La plateforme logicielle partagée 201 est un logiciel utilisé pour mettre en œuvre la ou les applications 202. Plus particulièrement, la plateforme 201 est adaptée à communiquer avec les applications, c'est-à-dire à recevoir et leur transmettre des données. Selon un mode de réalisation, la plateforme 201 est adaptée à gérer le stockage des données utilisées par la ou les applications logicielles 202. Selon un exemple, la plateforme logicielle 201 est conçue par un fabricant d'équipement d'origine (OEM, « Original Equipment Manufacturer »), ou fabricant, différent du dispositif électronique, comme le processeur ou l'élément sécurisé, la mettant en œuvre.

On appelle ici fabricant d'équipement d'origine, ou simplement fabricant, le concepteur initial d'un élément, comme un circuit, un dispositif ou un logiciel.

La ou les applications logicielles sécurisées 202 (Service) sont des logiciels sécurisés adaptés à mettre en œuvre une ou plusieurs fonctionnalités. Chaque application 202 peut aussi être appelée service logiciel, ou simplement service. Selon un mode de réalisation, une application 202 est mise en œuvre à partir de son code d'exécution, et peut générer et/ou utiliser des données associées à l'application, désignées également dans la suite comme des ressources numériques (Assets).

On appelle ici code d'exécution l'ensemble de données et instructions formant le ou les programmes mis en œuvre par une application. Quand une application est mise à jour, son code d'exécution est modifié.

De plus, on appelle ici ressource numérique, une ou plusieurs données générées par l'application lors de son fonctionnement et/ou utilisées pendant et par l'application pour son fonctionnement. Ces données peuvent être récoltées, générées, et/ou traitées par ladite application. Une ressource numérique peut être une donnée stockée temporairement par l'application, ou stockée de manière plus durable par l'application. Quand une application est mise à jour, les ressources numériques ne sont pas modifiées. En effet, il est souhaitable qu'une version mise à jour de l'application ait accès et puisse utiliser des données associées à la, ou aux, versions ultérieures. Une ressource numérique est généralement considérée comme une donnée sensible et/ou secrète.

Selon un mode de réalisation, chaque application logicielle 202 peut être conçue par un fabricant différent du concepteur de la plateforme logicielle 201 et du fabricant du dispositif électronique, comme le processeur ou l'élément sécurisé les mettant en œuvre. De même, différentes applications peuvent avoir des fabricants différents.

Chaque application 202 est adaptée à communiquer avec la plateforme 201, et, plus généralement, est adaptée à être mise en œuvre ou exécutée par la plateforme 201.

La ou les mémoires 203 représentent les accès à la ou les différentes mémoires du dispositif mettant en œuvre le système 200. Parmi ces mémoires, il existe par exemple au moins une partie d'une mémoire dont l'accès est strictement réservé à la plateforme 201, et au moins une partie d'une mémoire servant au stockage des ressources numériques des applications 202. C'est par exemple la plateforme 201 qui est adaptée à gérer les accès en mémoire. Les applications 202 n'ont par exemple pas accès directement aux mémoires 203.

Le système d'exploitation sécurisé 204 est, par exemple, le système d'exploitation du dispositif électronique, comme un processeur ou un élément sécurisé, mettant en œuvre le système 200. Le système d'exploitation 204 est par exemple adapté à communiquer avec la plateforme 201, mais aussi, selon un exemple non représenté, avec les mémoires 203 et les applications 202.

Les modes de réalisation décrits ci-après se rapportent à la sécurisation d'applications logicielles, telles que les applications 202, et plus particulièrement à la sécurisation de ressources numériques de telles applications logicielles. Il s'agit plus précisément d'éviter à une application logicielle l'accès à des ressources numériques qui ne lui sont pas destinées, comme des ressources numériques d'une autre application logicielles, ou des ressources numériques d'une ancienne version d'une même application logicielle d'un autre fournisseur d'applications, tel qu'un autre fabricant d'équipement d'origine, un autre fabriquant de circuit et/ou une tierce partie. Les modes de réalisation décrits ci-après permettent, en particulier, de pallier une attaque par substitution d'applications, dans laquelle une application pirate prend la place d'une application déjà installée en se faisant passer pour elle lors d'une mise à jour, dans le but d'avoir accès à des ressources numériques de l'application.

La figure 3 illustre la structure d'un module logiciel 300 d'une application logicielle, selon un mode de réalisation de la présente description.

Le module logiciel 300 est par exemple un module d'une application logicielle reçue par le dispositif 100, par l'intermédiaire des circuits d'interface 104. A titre d'exemple, le module logiciel 300 est un module d'une application n'étant pas déjà préalablement installée dans le dispositif 100. Dans un autre exemple, le module logiciel 300 est un module permettant la mise à jour d'une application préexistante du dispositif 100, par exemple la mise à jour d'une application 202.

Le module logiciel 300 comprend un en-tête 302 (HEADER) comprenant par exemple des informations, par exemple sur le format de l'image de l'application, son emplacement d'installation pour exécution dans la mémoire, la taille du code d'exécution, etc.

Le module logiciel 300 comprend en outre un code d'exécution 304 (CODE). A titre d'exemple, le code d'exécution est chiffré, par exemple par l'intermédiaire d'une clef symétrique connue uniquement par l'expéditeur du module logiciel 300. A titre d'exemple, la clef symétrique est chiffrée à l'aide d'une paire de clefs asymétriques. En particulier, la clef publique de la paire de clef asymétrique est utilisée pour chiffrer la clef symétrique. La clef privée est, par exemple, stockée dans le dispositif 100 et utilisée pour déchiffrée la clef symétrique. A titre d'exemple, la clef symétrique est comprise dans le format d'image de l'application. Ainsi, la clef privée étant connue uniquement du dispositif 100, elle peut également être utilisée pour chiffrer d'autres applications logicielles, provenant par exemple de différentes autorités. Afin que la clef privée soit inconnue d'un fabricant d'équipement d'origine, ou d'une tierce partie, la clef privée est par exemple stockée dans le dispositif 100 lors de la fabrication de ce dernier. A titre d'exemple, la clef privée est provisionnée dans le dispositif 100 par le fabriquant du dispositif 100, ou par une autorité, telle que par exemple le fabriquant d'un composant du dispositif 100, indépendante des applications logicielles.

Le module logiciel 300 comprend en outre des informations 305 comprenant, par exemple, une indication 306 de la version (VERSION) de l'application. Les informations 305 comprennent par exemple en outre des indications 308 des dépendances logicielles (DEPENDENCY) de l'application. A titre d'exemple, les indications 308 indiquent au dispositif 100 des composants logiciels et/ou matériels utilisés pour le bon fonctionnement de l'application. A titre d'exemple, les informations 305 comprennent une valeur d'identification 310 (SIGNER ID). Dans un exemple, le dispositif 100 est un objet connecté et la valeur d'identification est par exemple utilisée pour jouer le rôle d'un jeton (en anglais « token ») pour la mise en œuvre d'un service de jeton d'attestation initial (en anglais « initial attestation token ») permettant de fournir une information sur, par exemple, l'état du logiciel à, par exemple, un serveur distant.

Selon un mode de réalisation, lors de l'installation du module logiciel 300, une clef de chiffrement pour chiffrer et/ou déchiffrer des ressources (en anglais « asset ») est générée, par exemple par le circuit cryptographique 106, à partir de la valeur d'identifiant et d'une clef secrète, propre au dispositif 100. A titre d'exemple, la clef secrète est une clef matérielle unique (en anglais « Hardware Unique Key » - HUK) ou une clef dérivée d'une clef matérielle unique (en anglais « Derivated Hardware Unique Key » - DUHK). A titre d'exemple, la clef de chiffrement est obtenue par dérivation de la clef secrète par la valeur d'identification 310. Selon un mode de réalisation, la clef de chiffrement générée est utilisée pour chiffrer une ou plusieurs ressources numériques associées à l'application. Selon un autre mode de réalisation, la clef de chiffrement reçue est utilisée pour calculer une ou plusieurs valeurs de signature, associées à l'une ou plusieurs ressources. L'une ou plusieurs ressources sont stockées, par exemple chiffrées ou signées par l'intermédiaire de la clef de chiffrement, dans une mémoire non volatile du dispositif. A titre d'exemple, l'une ou plusieurs ressources ont été reçues par le dispositif 100 lors de l'exécution du logiciel. A titre d'exemple, le logiciel est configuré pour piloter un clavier et/ou un écran et demander la saisie d'un mot de passe par l'utilisateur. Dans un autre exemple, le logiciel est configuré pour commander la connexion vers un serveur qui, suite à l'exécution d'une procédure d'authentification sur la base de la valeur d'identification 310, fournira des ressources au logiciel. Ainsi, la valeur d'identification 310 est comprise dans l'image logicielle et est par exemple en outre utilisée dans la fonction de calcul de la clef de chiffrement.

Le module logiciel 300 comprend en outre des données 311, associées par exemple à une tierce partie, la tierce partie étant une entité différente du fabricant d'équipement d'origine. Dans certains cas, la tierce partie est par exemple le fabriquant du dispositif 100. Dans d'autres cas, la tierce partie est une entité complétement différente du fabriquant du dispositif 100. De manière générale, la tierce partie représente l'entité ayant par exemple conçue le module logiciel 300 et en particulier le code 304. Les données 311 comprennent par exemple une, ou plusieurs, valeurs de signature 312 (SIGNATURES). A titre d'exemple, la ou les signatures 312 comprennent une signature du code 304, par exemple générée par la tierce partie à partir d'une clef privée inconnue du dispositif 100. Les données 311 comprennent en outre une clef publique 314 (PUBLIC KEY). La clef publique 314 est par exemple une clef permettant au dispositif 100 de vérifier les valeurs de signatures 312. A titre d'exemple, lorsque le module logiciel est un module de mise à jour, la clef publique du module logiciel de mise à jour diffère de la clef publique du module logiciel de la version précédente de l'application. En effet, si le module de mise à jour est, par exemple, signé par un fournisseur différent de la version ultérieure, la clef symétrique ainsi que la valeur d'identification 310 différent de celles de la version ultérieure. Ainsi, la clef de chiffrement calculée sera, elle aussi, différente de celle calculée pour la version ultérieure. Les ressources stockées dans la mémoire non volatile, en association avec la version ultérieure, ne pourront alors plus être déchiffrée à l'aide de la clef de chiffrement et, par conséquent, ne pourront plus être utilisés. A titre d'exemple, la vérification des valeurs de signatures permet au dispositif 100 de s'assurer de la confiance du module logiciel 300 et d'authentifier l'autorité ayant construit le module logiciel 300.

Selon un mode de réalisation, la valeur d'identification 310 correspond à la clef publique à laquelle est appliqué une opération cryptographique. A titre d'exemple, la valeur d'identification 310 est un haché de la clef publique 314. La valeur d'identification 310 est par exemple obtenue par application d'une opération de hachage, par exemple le SHA256, sur la clef publique 314.

Le module logiciel 300 comprend un outre des informations 315 associées au fabricant d'équipement d'origine. A titre d'exemple, les informations 315 comprennent une autre valeur de signature 316 (OEM SIGNATURE) . A titre d'exemple, cette autre signature est associée à un fabricant d'équipement d'origine. A titre d'exemple, cette autre signature permet au fabricant d'équipement d'origine de contrôler l'installation de modules d'application venant d'une tierce partie. A titre d'exemple, un module d'application est alors installé uniquement dans le cas où la valeur de cette autre signature est correcte. A titre d'exemple, lorsque le module d'application provient du fabriquant d'équipement d'origine, la valeur d'identification est omise ou est aligné avec la clef publique du fabricant d'équipement d'origine, la valeur d'identification 310 étant par exemple un haché de la clef publique du fabricant d'équipement d'origine. Dans cet exemple, la clef publique du fabricant d'équipement d'origine est provisionnée à la fabrication du dispositif 100.

La figure 4 est un organigramme illustrant des étapes d'un procédé de vérification, selon un mode de réalisation de la présente description.

A titre d'exemple, tout ou partie des étapes décrites en relation avec la figure 4 est mise œuvre par l'intermédiaire du dispositif électronique 100, et par exemple par la plateforme logicielle 201 de la figure 2. C'est à dire que tout ou partie des actions réalisées par le dispositif électronique 100, telles que par exemple, des opérations cryptographiques par le, ou les, circuits 116 ; l'écriture, ou la lecture, dans les mémoires 203 ; etc. sont commandées par la plateforme logicielle 201.

Dans une étape 400 (MODULE RECEPTION), un module logiciel d'une application, semblable au module logiciel 300 décrit en relation avec la figure 3, est reçu par le dispositif 100. A titre d'exemple, le module logiciel de l'application est reçu suite à une communication sans fil, par exemple, une communication de type Wifi, Bluethooth, 4G, ou 5G, etc. Dans un autre exemple, le module logiciel est reçu par communication filaire. A titre d'exemple, la réception du module logiciel de l'application est initiée par le fabriquant du dispositif 100. Dans un autre exemple, la réception du module logiciel est initiée par un utilisateur du dispositif 100. Dans un exemple, le module logiciel de l'application reçu est une mise à jour d'une application déjà installée dans le dispositif 100. Dans un autre exemple, le module logiciel reçu permet l'installation d'une nouvelle application dans le dispositif 100.

Dans une étape 401 (AUTHENTICITY VERIFICATION), l'authenticité et/ou l'intégrité, du module logiciel est vérifiée par le dispositif 100, et en particulier par l'intermédiaire du processeur 101 et du ou des circuits cryptographique 106. A titre d'exemple, la vérification s'effectue par vérification des signatures 312 et/ou 316 et, par exemple, sur la base de la clef publique 314. L'étape 401 est par exemple réalisée lors d'une phase de démarrage du dispositif 100.

Selon un mode de réalisation, par exemple lorsque le module logiciel provient d'une tierce partie et comprend la valeur d'identification 310 et l'étape 401 comprend, en outre, la génération d'une valeur de vérification en appliquant une opération cryptographique, par l'intermédiaire du ou des circuits 106, sur la clef publique 314, telle que par exemple une opération de hachage, telle que le SHA256. Dans un autre exemple, lorsque le module d'application provient du fabricant d'équipement d'origine, l'opération cryptographique est réalisée sur une clef publique associée au fabricant d'équipement d'origine provisionnée dans le dispositif 100 lors de sa fabrication. L'étape 401 comprend alors la vérification de la valeur de vérification avec la valeur d'identification 310. A titre d'exemple, dans le cas où les deux valeurs ne correspondent pas, le module logiciel de l'application n'est pas installé et par exemple supprimé du dispositif 100.

Dans le cas alternatif où la valeur d'identification 310 n'est pas compris dans le module logiciel, une étape 402 (SIGNER ID) comprend la génération, par le ou les circuits 106, de la valeur d'identification 310. Par exemple, la valeur d'identification est générée directement à partir de la clef publique 314 ou à partir de la clef publique associée au fabricant d'équipement d'origine.

Dans une étape 403 (KEY GENERATION), une clef de chiffrement est générée, sur la base de la valeur d'identification 310, comprise dans le module logiciel ou générée lors de l'étape 402, et d'une clef secrète du dispositif 100. A titre d'exemple, la clef de chiffrement est générée par application d'une opération cryptographique, telle qu'une opération de chiffrement symétrique, par exemple de type AES, DES etc., sur la valeur d'identification 310 et avec la clef secrète. A titre d'exemple la clef secrète est une clef matérielle unique, ou une clef dérivée d'une clef matérielle unique. En d'autres termes, la clef secrète est propre au dispositif 100, la clef de chiffrement générée est donc aussi unique et propre au dispositif 100. Pour un même module logiciel de l'application, la clef de chiffrement générée différe d'un dispositif 100 à l'autre. De même, pour un même dispositif 100, les clefs de chiffrement générées pour deux modules logiciels venant de différents fournisseurs, par exemple venant d'une tierce partie et du fabricant d'équipement d'origine, diffèrent.

Dans une étape 404 (SECRETS GENERATION), la clef de chiffrement générée est utilisée pour générer un ou plusieurs données protégées, ou secrets, associés à l'application.

Dans un exemple, la clef de chiffrement générée est utilisée pour chiffrer, par exemple selon un algorithme de cryptographie symétrique, une ou plusieurs ressources numériques de l'application. Dans un autre exemple, la clef de chiffrement générée est utilisée pour calculer une ou plusieurs valeurs de signature de l'une ou plusieurs ressources numériques. Ainsi, la clef de chiffrement dépendant du module logiciel et du dispositif le recevant, les secrets générés dans l'étape 404 sont aussi propre à l'application et au dispositif 100.

Dans une étape 405, les données protégées ou secrets générés dans l'étape 404 sont stockés dans une première partie des mémoire 203. A titre d'exemple, le code d'exécution du module logiciel est, par exemple lors de l'étape 405, stocké dans une deuxième partie de la mémoire distincte de la première partie où sont stockés les données protégées lui étant associées. A titre d'exemple, le code d'exécution du module est chiffré et la plateforme logicielle 201 commande par exemple son déchiffrement par le circuit cryptographique puis le stockage du code déchiffré.

A titre d'exemple, dans une étape 406 (EXECUTION) optionnelle, le code d'exécution installée dans la deuxième partie de la mémoire est exécuté. A titre d'exemple, lors de l'exécution, la plateforme 201 commande la récupération des ressources numériques stockées dans la première partie de la mémoire 203. Pour ce faire, la plateforme 201 commande, par exemple, la récupération de la valeur d'identification 310, ou de la clef symétrique 314 dans le code d'exécution. A titre d'exemple, suite à l'authentification du code, la zone comprenant la valeur d'identification 310 et/ou la clef publique 314 est interdite. La clef de chiffrement est à nouveau générée pour pouvoir, par exemple, effectuer le déchiffrement des données protégées afin d'obtenir les ressources numériques. Dans un autre exemple, la clef de chiffrement à nouveau générée est utilisée pour vérifier la ou les valeurs de signatures associées aux ressources.

Un avantage des modes de réalisation décrits est qu'une première application ne peut pas avoir connaissance des valeurs des ressources numériques associées à une autre application différente de la première application.

Un autre avantage des modes de réalisation décrits est que la clef de chiffrement utilisée pour chiffrer, ou signer, les ressources n'est pas stockée en mémoire. En effet, la clef de chiffrement est par exemple calculée lors de chaque phase de démarrage du dispositif 100.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la génération de la clef de chiffrement à partir de la clef publique peut varier.

Enfin, la mise en œuvre pratique des modes de réalisation et variantes décrits est à la portée de la personne du métier à partir des indications fonctionnelles données ci-dessus. En particulier, pour ce qui est de la mise en œuvre de la plateforme logicielle.

## Revendications

1. Procédé comprenant :
a) la réception, par un dispositif électronique (100), d'un module logiciel (300) d'une première application (202), le module logiciel comprenant une clef publique associée à la première application ;
b) la génération, par un circuit cryptographique (106) du dispositif électronique, d'une clef de chiffrement sur la base d'une clef secrète du dispositif électronique et de l'un parmi : la clef publique (314) et une valeur d'identification (310) dérivée à partir de la clef publique ;
c) la génération d'une ou plusieurs données protégées en appliquant une opération cryptographique, par le circuit cryptographique, sur une ou plusieurs premières données associées à la première application et sur la base de la clef de chiffrement ; et
d) le stockage de l'une ou plusieurs données protégées dans une première partie d'une mémoire (102) du dispositif électronique.

2. Procédé selon la revendication 1, dans lequel l'opération cryptographique comprend le chiffrement, en utilisant la clef de chiffrement, de l'une ou plusieurs premières données.

3. Procédé selon la revendication 1 ou 2, dans lequel l'opération cryptographique (106) comprend le calcul d'une ou plusieurs premières valeurs de signature associées à l'une ou plusieurs premières données en utilisant la clef de chiffrement, l'une ou plusieurs données protégées comprenant l'une ou plusieurs premières valeurs de signature.

4. Procédé selon l'une quelconque des revendications 1 à 3, dans lequel la clef de chiffrement correspond à une clef secrète dérivée par application d'une fonction de dérivation de clef par le circuit cryptographique (106) sur la base de la valeur d'identification (310), la valeur d'identification étant issue d'un hachage de la clef publique (314).

5. Procédé selon l'une quelconque des revendications 1 à 4, dans lequel le module logiciel (300) comprend un code d'exécution (304), et une deuxième valeur de signature (312) associée au code d'exécution, le procédé comprenant en outre, avant la génération de l'un ou plusieurs données protégées, l'authentification du module logiciel sur la base d'une vérification de la deuxième valeur de signature par l'intermédiaire de la clef publique (314).

6. Procédé selon la revendication 5, comprenant en outre le stockage du code d'exécution dans une deuxième partie de la mémoire (102) distincte de la première partie.

7. Procédé selon l'une quelconque des revendications 1 à 6, dans lequel les étapes a) à d) sont réalisées par l'intermédiaire d'une plateforme logicielle (201) du dispositif électronique (100).

8. Procédé selon l'une quelconque des revendications 1 à 7, comprenant en outre, avant la réalisation de l'étape b) :
- la génération d'une valeur de vérification (310) en appliquant une fonction de hachage à la clef publique (314) ;
- la comparaison de la valeur de vérification avec la valeur d'identification ; et
- si la valeur de vérification et la valeur d'identification ne correspondent pas entre elles, la suppression du module logiciel (300).

9. Procédé selon l'une quelconque des revendications 1 à 7, comprenant en outre la génération de la valeur d'identification, par application d'une fonction de hachage, par le circuit cryptographique (106), à la clef publique (314).

10. Procédé selon l'une quelconque des revendications 1 à 9, dans lequel la clef secrète du dispositif électronique est une clef unique matérielle ou une clef dérivée d'une clef unique matérielle.

11. Procédé selon l'une quelconque des revendications 1 à 10, comprenant en outre la modification de la clef publique (314) lors d'une mise-à-jour de la première application (202).

12. Procédé selon l'une quelconque des revendications 1 à 11, comprenant en outre l'exécution de la première application (202), par un processeur (101) du dispositif, l'exécution comprenant la récupération de l'une ou plusieurs premières données associée à la première application, en faisant ;
- l'extraction de la clef publique (314) et une nouvelle génération de la clef de chiffrement sur la base d'une clef secrète du dispositif électronique et de l'un parmi : la clef publique (314) et une valeur d'identification (310) dérivée à partir de la clef publique ;
- l'application d'une nouvelle opération cryptographique sur l'une ou plusieurs données protégées stockées dans la première partie de la mémoire (102) ; et
- la récupération de l'une ou plusieurs premières données.

13. Procédé selon la revendication 12, dans lequel la récupération de l'une ou plusieurs premières données s'effectue par l'intermédiaire d'une plateforme logicielle (201) du dispositif électronique (100).

14. Dispositif électronique (100) configuré pour :
recevoir un module logiciel (300) d'une première application (202), le module logiciel comprenant une clef publique (314), le dispositif électronique comprenant :
un circuit cryptographique (106) configuré pour :
- générer une clef de chiffrement sur la base de l'un parmi : la clef publique et une valeur d'identification (310) dérivée à partir de la clef publique ;
- générer un ou plusieurs données protégées en appliquant une opération cryptographique à une ou plusieurs premières données associées à la première application sur la base de la clef de chiffrement ; et
- une mémoire (102) configurée pour stocker l'une ou plusieurs données protégées.

15. Dispositif électronique (100) selon la revendication 14, comprenant en outre une plateforme logicielle (201) configurée pour contrôler l'accès à la mémoire (102).

## Patentansprüche

1. Ein Verfahren, das Folgendes aufweist:
a) das Empfangen, durch eine elektronische Einrichtung (100), eines Softwaremoduls (300) einer ersten Anwendung (202), wobei das Softwaremodul einen öffentlichen Schlüssel aufweist, der der ersten Anwendung zugeordnet ist;
b) das Erzeugen, durch eine kryptographische Schaltung (106) der elektronischen Einrichtung, eines Verschlüsselungsschlüssels auf Grundlage eines geheimen Schlüssels der elektronischen Einrichtung und auf Grundlage eines von Folgendem: des öffentlichen Schlüssels (314) und eines Identifikationswerts (310), der von dem öffentlichen Schlüssel abgeleitet ist;
c) das Erzeugen eines oder mehrerer geschützter Datenelemente durch Anwenden einer kryptographischen Operation, durch die kryptographische Schaltung, auf ein oder mehrere erste Datenelemente, die der ersten Anwendung zugeordnet sind, und auf Grundlage des Verschlüsselungsschlüssels; und
d) das Speichern des einen oder der mehreren geschützten Datenelemente in einem ersten Abschnitt eines Speichers (102) der elektronischen Einrichtung.

2. Das Verfahren nach Anspruch 1, wobei die kryptographische Operation das Verschlüsseln eines oder mehrerer erster Datenelemente unter Verwendung des Verschlüsselungsschlüssels aufweist.

3. Das Verfahren nach Anspruch 1 oder 2, wobei die kryptographische Operation (106) das Berechnen eines oder mehrerer erster Signaturwerte aufweist, die einem oder mehreren ersten Datenelementen unter Verwendung des Verschlüsselungsschlüssels zugeordnet sind, wobei das eine oder die mehreren geschützten Datenelemente den einen oder die mehreren ersten Signaturwerte aufweisen.

4. Das Verfahren nach einem der Ansprüche 1 bis 3, wobei der Verschlüsselungsschlüssel einem geheimen Schlüssel entspricht, der durch Anwenden einer Schlüsselableitungsfunktion durch die kryptographische Schaltung (106) auf Grundlage des Identifikationswerts (310) abgeleitet ist, wobei der Identifikationswert aus einem Hashen des öffentlichen Schlüssels (314) resultiert.

5. Das Verfahren nach einem der Ansprüche 1 bis 4, wobei das Softwaremodul (300) einen Ausführungscode (304) und einen zweiten Signaturwert (312) aufweist, der dem Ausführungscode zugeordnet ist, wobei das Verfahren ferner vor dem Erzeugen des einen oder der mehreren geschützten Datenelemente das Authentifizieren des Softwaremoduls auf Grundlage einer Verifizierung des zweiten Signaturwerts über den öffentlichen Schlüssel (314) aufweist.

6. Das Verfahren nach Anspruch 5, ferner aufweisend das Speichern des Ausführungscodes in einem zweiten Abschnitt des Speichers (102), der sich von dem ersten Abschnitt unterscheidet.

7. Das Verfahren nach einem der Ansprüche 1 bis 6, wobei die Schritte a) bis d) über eine Softwareplattform (201) der elektronischen Einrichtung (100) durchgeführt werden.

8. Das Verfahren nach einem der Ansprüche 1 bis 7, ferner aufweisend vor dem Durchführen von Schritt b):
- das Erzeugen eines Verifizierungswerts (310) durch Anwenden einer Hashfunktion auf den öffentlichen Schlüssel (314);
- das Vergleichen des Verifizierungswerts mit dem Identifikationswert; und
- falls der Verifizierungswert und der Identifikationswert nicht übereinstimmen, das Entfernen des Softwaremoduls (300).

9. Das Verfahren nach einem der Ansprüche 1 bis 7, ferner aufweisend das Erzeugen des Identifikationswerts durch Anwenden einer Hashfunktion, durch die kryptographische Schaltung (106), auf den öffentlichen Schlüssel (314).

10. Das Verfahren nach einem der Ansprüche 1 bis 9, wobei der geheime Schlüssel der elektronischen Einrichtung ein hardwareeindeutiger Schlüssel oder ein von einem hardwareeindeutigen Schlüssel abgeleiteter Schlüssel ist.

11. Das Verfahren nach einem der Ansprüche 1 bis 10, ferner aufweisend das Ändern des öffentlichen Schlüssels (314) während einer Aktualisierung der ersten Anwendung (202).

12. Das Verfahren nach einem der Ansprüche 1 bis 11, ferner aufweisend das Ausführen der ersten Anwendung (202) durch einen Prozessor (101) der Einrichtung, wobei das Ausführen das Abrufen des einen oder der mehreren ersten Datenelemente, die der ersten Anwendung zugeordnet sind, durch Durchführen von Folgendem aufweist:
- das Extrahieren des öffentlichen Schlüssels (314) und ein erneutes Erzeugen des Verschlüsselungsschlüssels auf Grundlage eines geheimen Schlüssels der elektronischen Einrichtung und auf Grundlage eines von Folgendem: des öffentlichen Schlüssels (314) und eines Identifikationswerts (310), der von dem öffentlichen Schlüssel abgeleitet ist;
- das Anwenden einer neuen kryptographischen Operation auf das eine oder die mehreren geschützten Datenelemente, die in dem ersten Abschnitt des Speichers (102) gespeichert sind; und
- das Abrufen des einen oder der mehreren ersten Datenelemente.

13. Das Verfahren nach Anspruch 12, wobei das Abrufen des einen oder der mehreren ersten Datenelemente über eine Softwareplattform (201) der elektronischen Einrichtung (100) durchgeführt wird.

14. Eine elektronische Einrichtung (100), eingerichtet zum:
Empfangen eines Softwaremoduls (300) von einer ersten Anwendung (202), wobei das Softwaremodul einen öffentlichen Schlüssel (314) aufweist,
wobei die elektronische Einrichtung Folgendes aufweist:
eine kryptographische Schaltung (106), eingerichtet zum:
- Erzeugen eines Verschlüsselungsschlüssels auf Grundlage eines von Folgendem: des öffentlichen Schlüssels und eines Identifikationswerts (310), der von dem öffentlichen Schlüssel abgeleitet ist;
- Erzeugen eines oder mehrerer geschützter Datenelemente durch Anwenden einer kryptographischen Operation auf ein oder mehrere erste Datenelemente, die der ersten Anwendung auf Grundlage des Verschlüsselungsschlüssels zugeordnet sind; und
- einen Speicher (102), eingerichtet zum Speichern des einen oder der mehreren geschützten Datenelemente.

15. Die elektronische Einrichtung (100) nach Anspruch 14, wobei die elektronische Einrichtung ferner eine Softwareplattform (201) aufweist, die eingerichtet zum Steuern des Zugriffs auf den Speicher (102) ist.

## Claims

1. Method comprising:
a) the reception, by an electronic device (100), of a software module (300) of a first application (202), the software module comprising a public key associated with the first application;
b) the generation, by a cryptographic circuit (106) of the electronic device, of an encryption key based on a secret key of the electronic device and on one of: the public key (314) and an identification value (310) derived from the public key;
c) the generation of one or a plurality of protected data items by application of a cryptographic operation, by the cryptographic circuit, on one or a plurality of first data items associated with the first application and based on the encryption key; and
d) the storage of the one or a plurality of protected data items in a first portion of a memory (102) of the electronic device.

2. Method according to claim 1, wherein the cryptographic operation comprises the encryption, by using the encryption key, of one or a plurality of first data items.

3. Method according to claim 1 or 2, wherein the cryptographic operation (106) comprises the calculation of one or a plurality of first signature values associated with the one or a plurality of first data items by using the encryption key, the one or a plurality of protected data items comprising the one or a plurality of first signature values.

4. Method according to any of claims 1 to 3, wherein the encryption key corresponds to a secret key derived by application of a key derivation function by the cryptographic circuit (106) based on the identification value (310), the identification value resulting from a hashing of the public key (314).

5. Method according to any of claims 1 to 4, wherein the software module (300) comprises an execution code (304), and a second signature value (312) associated with the execution code, the method further comprising, prior to the generation of the one or a plurality of protected data items, the authentication of the software module based on a verification of the second signature value via the public key (314).

6. Method according to claim 5, further comprising the storage of the execution code in a second portion of the memory (102) distinct from the first portion.

7. Method according to any of claims 1 to 6, wherein steps a) to d) are carried out via a software platform (201) of the electronic device (100).

8. Method according to any of claims 1 to 7, further comprising, prior to the carrying out of step b):
- the generation of a verification value (310) by applying a hash function to the public key (314);
- the comparison of the verification value with the identification value; and
- if the verification value and the identification value do not match, the removal of the software module (300).

9. Method according to any of claims 1 to 7, further comprising the generation of the identification value, by application of a hash function, by the cryptographic circuit (106), to the public key (314).

10. Method according to any of claims 1 to 9, wherein the secret key of the electronic device is a hardware unique key or a key derived from a hardware unique key.

11. Method according to any of claims 1 to 10, further comprising the modification of the public key (314) during an update of the first application (202).

12. Method according to any of claims 1 to 11, further comprising the execution of the first application (202), by a processor (101) of the device, the execution comprising the retrieval of the one or a plurality of first data items associated with the first application, by performing:
- the extraction of the public key (314) and a new generation of the encryption key based on a secret key of the electronic device and on one of: the public key (314) and an identification value (310) derived from the public key;
- the application of a new cryptographic operation to the one or a plurality of protected data items stored in the first portion of the memory (102); and
- the retrieval of the one or a plurality of first data items.

13. Method according to claim 12, wherein the retrieval of the one or a plurality of first data items is performed via a software platform (201) of the electronic device (100).

14. Electronic device (100) configured to:
receive a software module (300) from a first application (202), the software module comprising a public key (314), the electronic device comprising:
a cryptographic circuit (106) configured to:
- generate an encryption key based on one of: the public key and an identification value (310) derived from the public key;
- generate one or a plurality of protected data items by applying a cryptographic operation to one or a plurality of first data items associated with the first application based on the encryption key; and
- a memory (102) configured to store the one or a plurality of protected data items.

15. Electronic device (100) according to claim 14, further comprising a software platform (201) configured to control the access to the memory (102).
